# EUROPEAN PATENT APPLICATION

(11) **EP 4 106 369 A1**
(43) Date of publication of application: **21.12.2022**
(21) Application number: 20918310.2
(22) Date of filing: 13.02.2020
(51) Int. Cl.: H04W 8/22, H04W 52/28

(54) **TERMINAL, AND CAPABILITY INFORMATION TRANSMISSION METHOD**

(71) Applicant: NTT DOCOMO, INC., Chiyoda-Ku Tokyo 100-6150 (JP)
(72) Inventor: UMEDA, Hiromasa, Tokyo 100-6150 (JP); TAKAHASHI, Hideaki, Tokyo 100-6150 (JP); OGUMA, Yuta, Tokyo 100-6150 (JP)
(74) Representative: Hoffmann Eitle
(86) International application number: PCT/JP2020/005578
(87) International publication number: WO 2021/161455

(57) **Abstract**

A terminal including a transmission unit configured to transmit capability information to a base station apparatus, wherein the transmission unit transmits, as the capability information, each power class supported for each transmission technology in a plurality of transmission technologies to the base station apparatus.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being studied.

In addition, in NR, standardization of a user terminal (HPUE: High Power UE) that performs transmission with high power for coverage expansion is being promoted. As an example of HPUE, a user terminal of Power class 2 with a maximum transmit power value of 26 dBm is specified. (Non-patent Document 1, etc.).

### [Prior art documents]

### [Non-patent document]

[Non-Patent Document 1] 3GPP TS 38. 101-1 V15. 8. 0(2019-12)
[Non-Patent Document 2] 3GPP TS 38. 331 V15. 8. 0(2019-12)

### [Summary of Invention]

### [Problem to be solved by the invention]

Depending on its capability, the user terminal can perform transmission using various transmission technologies such as CA (Carrier Aggregation), DC (Dual-Connectivity), SUL (Supplement Uplink), and UL MIMO. Transmission technology such as CA, DC, SUL, UL MIMO, etc. used by the user terminal may be called "features". Normal single-carrier transmission without UL MIMO is one of features . For example, for a feature called DC, various features can be executed within each RAT constituting the DC. The transmission of each RAT is also one of features.

The user terminal calculates a maximum transmission power value based on its own power class and an allowable power reduction value, and performs transmission with a power equal to or less than the maximum transmission power value (Non-Patent Document 1). The user terminal transmits its own power class to the base station apparatus as capability information (Non-Patent Document 2). Therefore, the base station apparatus can appropriately perform power control since a margin of the transmission power of the user terminal can be ascertained.

However, there is a problem that the user terminal operating in accordance with the prior art described in Non-Patent Documents 1 and 2, etc. may not be able to appropriately notify the power class to the base station apparatus.

The present invention has been made in view of the foregoing points, and is intended to provide a technique that enables a user terminal to appropriately notify the base station apparatus of a power class.

### [Means for Solving Problems]

According to the disclosed technique, there is provided a terminal including: a transmission unit configured to transmit capability information to a base station apparatus, wherein the transmission unit transmits, as the capability information, each power class supported for each transmission technology in a plurality of transmission technologies to the base station apparatus.

### [Effects of the Invention]

According to the disclosed technique, a technique is provided that allows the user terminal to appropriately notify the base station apparatus of a power class.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram showing transmission of capability information;
Fig. 4 is a diagram showing an example of a notifying method of a power class;
Fig. 5 is a diagram showing an example of a notifying method of a power class;
Fig. 6 is a diagram showing an example of a notifying method of a power class;
Fig. 7 is a diagram showing an example of a notifying method of a power class;
Fig. 8 is a diagram showing an example of notification of a usable power class;
Fig. 9 is a diagram showing an example of a functional configuration of a base station apparatus 10 according to an embodiment of the present invention;
Fig. 10 is a diagram showing an example of a functional configuration of a user terminal 20 according to an embodiment of the present invention;
Fig. 11 is a diagram illustrating an example of a hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The wireless communication system (the base station apparatus 10 and the user terminal 20) according to the present embodiment basically operates according to the existing specification (for example, Non-Patent Documents 1 and 2) . However, in order to overcome the prior art problem of inability to properly notify the base station apparatus of the power class, the user terminal 20 performs operations that are not included in the existing specification. In the description of the present embodiment, operations not provided in the present specification are mainly described. All the values described below are examples.

In embodiments of the present invention, the duplex method may be a TDD (Time Division Duplex) method, a FDD (Frequency Division Duplex) method, or any other method (e.g., Flexible Duplex, etc.).

In an embodiment of the present invention, "wireless parameter or the like being configured" may mean that a predetermined value is preconfigured or that a wireless parameter notified from the base station apparatus 10 or the user terminal 20 is configured.

### (System Configuration)

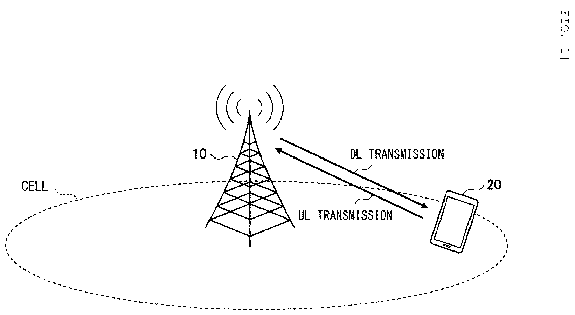

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and may be more than one each. The user terminal 20 may be referred to as a "terminal."

The base station apparatus 10 is a communication device that provides one or more cells and performs wireless communication with the user terminal 20. The physical resources of the radio signal are defined in a time domain and a frequency domain.

For example, OFDM is used as the wireless access scheme. In the frequency domain, as subcarrier spacing (SCS), at least 15 kHz, 30 kHz, 120 kHz, and 240 kHz are supported. In addition, resource blocks are constructed by a predetermined number of consecutive subcarriers (e.g., 12) regardless of SCS.

The user terminal 20 detects an SSB (SS/PBCH block) and identifies an SCS for PDCCH and PDSCH based on PBCH included in the SSB when making the initial access.

In the time domain, a slot is configured by a plurality of OFDM symbols (e.g., 14 regardless of subcarrier spacing). A slot is a scheduling unit. In addition, a subframe of 1 ms interval is defined, and a frame of 10 subframes is defined. The number of symbols per slot is not limited to 14.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a SCell (Secondary Cell) and a PCell (Primary Cell) by a CA (Carrier Aggregation).

The user terminal 20 is a communication device, having a wireless communication function, such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

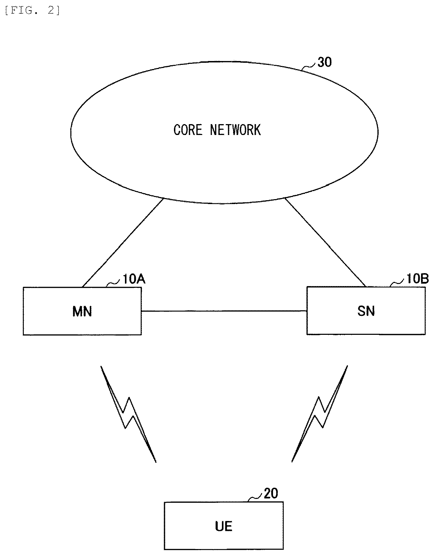

Fig. 2 shows an example of a configuration of a wireless communication system when DC (Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called MCG (Master Cell Group), and the cell group provided by the base station apparatus 10B that is an SN is called SCG (Secondary Cell Group). The DC may be NR only DC (NR-DC) or DC of LTE and NR DC (EN-DC). NR, LTE, etc. may be referred to as RAT (Radio Access Technology).

In the wireless communication system according to this embodiment, when an unlicensed band is used, an LBT (Listen Before Talk) is executed. The base station apparatus 10 or the user terminal 20 performs transmission when the LBT result is idle, and does not perform transmission when the LBT result is busy.

### (Issues Related to power class)

In 3GPP, power class is specified as a maximum transmission power value of the user terminal. Hereafter, the power class is written as PC. For example, PC3 (23dBm) and PC2 (26dBm) are specified.

In NR, PCs are specified for each band (NR band), for each band combination such as EN-DC and CA, and for each of several features such as UL MIMO. For example, in Non-Patent Document 1, PCs are specified in the following tables.

- Normal single band: Table 6.2.1-1: UE Power Class
- CA band combination: Table 6.2A.1.3-1 UE Power Class for uplink inter-band CA (two bands)
- UL MIMO: Table 6.2D.1-1: UE Power Class for UL MIMO in closed loop spatial multiplexing scheme

As described in Non-Patent Document 2, a user terminal that complies with the provisions of Non-Patent Document 2 can notify the base station apparatus 10 of a PC of the E-UTRA part (LTE side) at the time of EN-DC by ue-CA-PowerClass-N. In addition, the user terminal according to the provision of Non-Patent Document 2 can notify the base station apparatus 10 of a whole PC at the time of EN-DC for each band combination by powerClass-v1530. In addition, the user terminal according to the provision of Non-Patent Document 2 can notify the base station apparatus 10 of the PC at the time of single band by ue-PowerClass. If the PC for the NR single band is smaller than the whole PC for the EN-DC, the PC for the NR band for the EN-DC can be regarded as the same as the PC for the single band.

However, the user terminal 20 that complies with the provisions of Non-Patent Document 2 cannot notify the base station apparatus 10 of a PC when performing UL MIMO. Therefore, the base station apparatus 10 cannot ascertain the PC of the user terminal when the user terminal 20 is using UL MIMO.

The user terminal 20 supporting UL MIMO has two transmission systems (for convenience, transmission system 1 and transmission system 2) at least for supporting bands. For example, for providing the user terminal 20 with PC2, the maximum transmission power of the two transmission systems as a total is 26 dBm. Therefore, as the supporting maximum transmission power of each transmission system, the following three patterns can be considered.
(1) Transmission system 1 = supporting 23 dBm, transmission system 2 = supporting 23 dBm
   - PC3 for NR single.
(2) Transmission system 1 = supporting 23 dBm, transmission system 2 = supporting 26 dBm
   - PC3 or PC2 for NR single.
(3) Transmission system 1 = supporting 26 dBm, transmission system 2 = supporting 26 dBm
   - PC3 or PC2 for NR single.

Regardless of which of (1) to (3) above is implemented, the user terminal 20 supports PC2 for UL MIMO. However, if (1) is selected, PC as NR single is limited to PC3 unless the transmission diversity (Tx diversity) is clearly specified and 23 dBm + 23 dBm = 26 dm is allowed. Alternatively, PC of NR single PC when using Intra band EN-DC is limited to PC3.

The base station apparatus 10 may estimate that a PC in the single band of the user terminal 20 is a PC when the UL MIMO is used for the band. However, as described above, even if PC at the time when UL MIMO is not used is PC3, PC2 may be used at the time when UL MIMO is used. In this case, the base station apparatus 10 cannot correctly estimate the maximum transmission power of the user terminal 20 at the time when UL MIMO is used.

### <Example of feature other than UL MIMO>

The user terminal 20 according to the present embodiment includes a plurality of antennas and can perform transmission diversity (Tx diversity). Specifically, the user terminal 20 may perform spatial or selective diversity. Spatial diversity is a technique for simultaneously transmitting the same signal from physically different antennas. Selective diversity is a technique that utilizes one of the physically different antennas that is appropriate at a given moment.

However, the existing provisions of Non-Patent Document 1, etc. do not specify a PC for transmission diversity, and Non-Patent Document 2 does not provide provisions for notifying the PC. Therefore, the user terminal 20 according to the existing provisions of Non-Patent Document 1, 2, and the like cannot notify the base station apparatus 10 of a PC when transmission diversity is used.

If it is assumed that a PC when using UL MIMO can be notified to the base station apparatus 10, and the user terminal 20 supports UL MIMO with a band, it may be assumed that the PC when using the transmission diversity of the band is the same as the PC of UL MIMO.

However, it can be considered that the user terminal 20 supporting PC2 in UL MIMO may become PC3 when transmit diversity is used, including selection diversity utilizing one antenna. In this case, the base station apparatus 10 cannot correctly know the PC of the user terminal 20 when transmission diversity is used.

### <Problem related to band combination>

The user terminal 20 according to the existing provisions of Non-Patent Document 1, 2, etc. can notify the base station apparatus 10 of a PC in the LTE stand-alone (including LTE CA), a PC in the NR stand-alone (including NR CA), and a PC in the EN-DC band combination (including a PC on the LTE CA side when using EN-DC).

However, the user terminal 20 according to the existing provisions of Non-Patent Documents 1, 2, etc. is unable to notify any the PC of the LTE single band and the PC of the NR single band when using EN-DC. If the PC for the NR single band is smaller than the overall PC for EN-DC, the PC for the NR band for EN-DC can be regarded as the same as the PC for the single band.

Therefore, the base station apparatus 10 cannot know the LTE-side PC and the NR-side PC when using EN-DC. When the LTE side performs LTE CA at the time of EN-DC, the base station apparatus 10 may assume that the PC of LTE single is the same as the PC of LTE CA, but the estimation is not always correct.

In the following, description is given by taking EN-DC of LTE Band1 + LTE Band3 + NR Band78 (up to two bands for UL) as an example.

In this case, the user terminal 20 according to the existing provisions may notify the base station apparatus 10 of a PC as the EN-DC band combination at the time of EN-DC and a PC of LTE Band1+LTE Band3 at the time of using EN-DC.

However, when CA is not used in the LTE side, as in the case of EN-DC of LTE Band1 + NR Band78, the base station apparatus 10 cannot know the LTE side PC.

As another example, Intra band EN-DC LTE Band 41 + NR Band41 (n41) will be described. As described in Non-Patent Document 1, PC2 is specified for the band combination. As described above, the user terminal 20 operating in accordance with existing provisions may notify the base station apparatus 10 that PC2 is supported in the band combination if PC2 is supported in the band combination.

When defining specifications for EN-DC, it was assumed that the band supports NR UL MIMO with a high probability. Therefore, two PAs were used to define the specifications for EN-DC PC2. It is also possible to use one PA for implementation, but in this case, it is permitted to use as much MPR as is necessary and is unlikely to be used in practice.

When two PAs are used to implement EN-DC PC2, each PA need not be capable of supporting 26 dBm (PC2). Here, similarly to the above-described representation, the following implementations (1) to (4) of the transmission system 1 and the transmission system 2 may be implemented by expressing a system having one PA as a "transmission system." In this example, implementation by one transmission system (implementation by single-PA) is excluded.
(1) Transmission system 1 = 23 dBm (LTE), transmission system 2 = 23 dBm (NR)
   - (LTE,NR)=(PC3,PC3)
(2) Transmission system 1 = 23 dBm (LTE) and transmission system 2 = 26 dBm (NR)
   - (LTE,NR)=(PC3,PC3),(PC3,PC2)
(3) Transmission system 1 = 26 dBm (LTE), 23 dBm (NR)
   - (LTE,NR)=(PC3,PC3),(PC2,PC3)
(4) Transmission system 1 = 26 dBm (LTE) and transmission system 2 = 26 dBm (NR)
   - (LTE,NR)=(PC3,PC3), (PC3,PC2), (PC2,PC3), (PC2,PC2)

In the case of intra band EN-DC LTE Band41 + NR Band41 (n41), since the LTE side LTE CA is not used when EN-DC is used, the user terminal 20 operating in accordance with the existing provisions cannot notify the base station apparatus 10 of a PC of the LTE CA, and thus the base station apparatus 10 cannot estimate a PC of LTE from the PC of the LTE CA. In addition, since the user terminal 20 according to the existing provisions cannot notify the NR-side PC when EN-DC is used, the base station apparatus 10 cannot know the NR-side PC when EN-DC is used.

In order to know each of the LTE-side PC and the NR-side PC when EN-DC is used, it can be considered that the base station apparatus 10 refers to a PC of the single-band LTE and a PC of the single-band NR notified from the user terminal 20. However, in the above-described implementation (1), for example, when executing single band NR, it is not necessary to transmit a signal of LTE. Therefore, the user terminal 20 may use the PA of LTE to transmit an NR signal and notify PC2 as 23dBm + 23dBm. In addition, without doing so, there is a possibility that only one PA is used to notify PC3, and it is impossible to accurately grasp the LTE and NR-side PCs at EN-DC from single-band NR PCs, etc. Configuration and operation for solving the problem will be described below.

### (Operation of the system according to this embodiment)

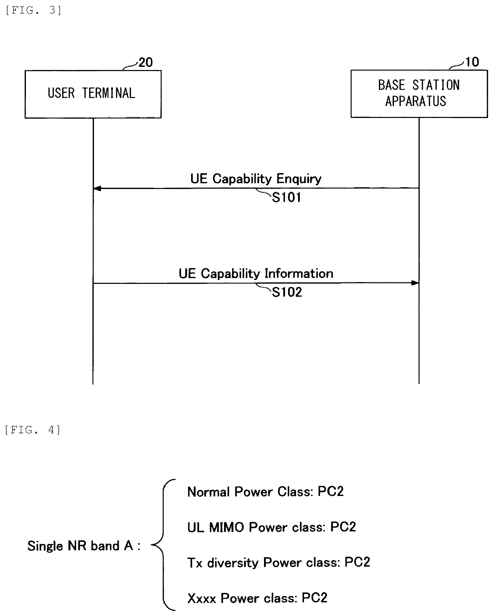

Fig. 3 is a diagram for explaining a basic operation example of a communication system according to the present embodiment.

In the example shown in Fig. 3, in S101, a capability information query (UE Capability Enquiry) is transmitted from the base station apparatus 10 to the user terminal 20, and the user terminal 20 receives the capability information query.

In S102, the user terminal 20 transmits its own capability information (UE Capability Information) to the base station apparatus 10.

(Information on a power class (PC) to be notified as capability information)

Hereinafter, information of PC that the user terminal 20 transmits to the base station apparatus 10 as capability information will be described.

The user terminal 20 according to the present embodiment notifies the base station apparatus 10 of all PCs supported by the user terminal 20 for each supporting band and for each supporting feature. For example, in the case where the user terminal 20 supports PC2 as a PC in the normal state (this is also an example of a feature) in which a particular feature such as UL MIMO is not used in the NR band A, the user terminal 20 supports PC2 as a PC in the case where UL MIMO is used, the user terminal 20 supports PC2 as a PC in the case where the transmission diversity is used, and the user terminal 20 supports PC2 as a PC in the case where a feature called Xxxx is used, as shown in Fig. 4, the user terminal 20 notifies the base station apparatus 10 of "PC2" as a supporting PC for the NR band A.

If the user terminal 20 supports each of three PCs "PCx, PCy, and PCz" for each feature shown in Fig. 4, the user terminal 20 notifies the base station apparatus 10 of "PCx, PCy, and PCz" as supporting PCs for each feature for the NR band A.

As described above, the user terminal 20 explicitly notifies the base station apparatus 20 of PC(s) supported for each feature, so that the base station apparatus 10 can clearly grasp the PC(s) when the user terminal 20 is using a feature. Thus, the base station apparatus 10 can appropriately perform power control when using the feature.

Also for features using a combination of bands (band combination), the user terminal 20 notifies, for each band combination, the base station apparatus 10 of each PC supported for the whole features (the whole band combination), and of each supporting PC for individual RATs constituting the band combination when the feature is used, for each supporting feature. For DC, the DC may be DC of NR and LTE, DC of NR and NR, and DC of LTE and LTE.

For example, it is assumed that, the user terminal 20 supports PCx as a PC for the entire EN-DC when using EN-DC for communicating with the base station apparatus of LTE and the base station apparatus of NR, supports PCx as a PC for the band (single band) of LTE when using EN-DC, supports PCx as a PC when using CA of LTE, supports PCx, PCy, ... as PCs for the band of NR (when not using a specific feature), supports PCx, PCy, ... as PCs when using UL MIMO on the NR side, supports PCx, PCy, ... as PCs when using transmission diversity on the NR side, and supports PCx, PCy, ... as PCs when using feature of Xxxx on the NR side.

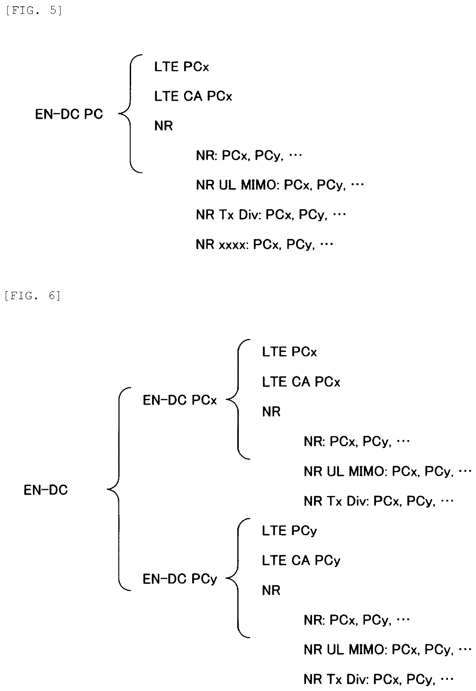

In this case, as shown in Fig. 5, the user terminal 20 notifies the base station apparatus 10 of a PC of the whole EN-DC, a PC of the LTE side (when CA is not used), a PC of the LTE side when CA is used, and a PC of each feature of the NR side. When the user terminal 20 supports CA of UL at the NR side, the user terminal 20 also notifies the base station apparatus 10 of a PC at the NR side when the CA is used when using EN-DC.

Since each of "not-using CA" (single band) and CA is also one feature, the example of Fig. 5 shows that the user terminal 20 notifies the base station apparatus 10 of all supported PCs for each feature of each RAT constituting feature called DC.

From the above-described notification, for example, the base station apparatus 10 can know that, when the user terminal 20 utilizes PC2 of EN-DC, the user terminal 20 is operable with LTE PC3 + NR PC2. Accordingly, when the required power of LTE is low (100 mW) and the required power of NR side is high (300 m), the base station apparatus 10 can consciously extract the maximum power of the NR in the user terminal 20. If it is found that the NR side only supports PC3 (200 mW), the LTE side band can be doubled to 200 mW + 200 mW.

Next, the case where the user terminal 20 supports PCx and PCy as PCs of the entire EN-DC when using the EN-DC will be described.

In this case, it is assumed that the user terminal 20 supports PCx as a PC for the band (single band) of LTE when using EN-DC, supports PCx as a PC when using CA of LTE, supports PCx, PCy, ... as PCs for the band of NR (when not using a specific feature), supports PCx, PCy, ... as PCs when using UL MIMO on the NR side, supports PCx, PCy, ... as PCs when using transmission diversity on the NR side, and supports PCx, PCy, ... as PCs when using feature of Xxxx on the NR side.

Further, it is assumed that the user terminal 20 supports PCy as a PC for the band (single band) of LTE when using PCy of EN-DC, supports PCy as a PC when using CA of LTE, supports PCx, PCy, ... as PCs for the band of NR (when not using a specific feature), supports PCx, PCy, ... as PCs when using UL MIMO on the NR side, supports PCx, PCy, ... as PCs when using transmission diversity on the NR side, and supports PCx, PCy, ... as PCs when using feature of Xxxx on the NR side.

In this case, as shown in Fig. 6, the user terminal 20 notifies the base station apparatus 10 of PCx and PCy as PCs for the entire EN-DC, each PC for each LTE feature and each PC for each NR feature when PCx is used as a PC for the entire EN-DC, and, each PC for each LTE feature and each PC for each NR feature when PCy is used as a PC for the entire EN-DC

That is, the user terminal 20 according to the present embodiment notifies the base station apparatus 10 of each PC supported at the time of using a higher feature (e.g., DC) and each PC supported at each lower feature (e.g., each RAT constituting a DC) for each PC when using the higher feature, for each feature (e.g., a single band, a CA, a UL MIMO, and a transmission diversity) of the lower feature (e.g., NR).

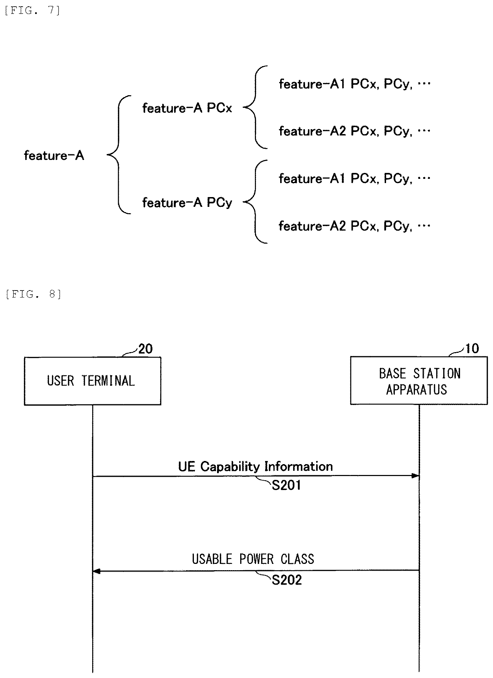

For example, if the user terminal 20 supports PCx and PCy as PCs when using feature-A (e.g., when using EN-DC), supports PCx, PCy, ... in feature-Al (e.g., communication on the LTE side) when using PCx when using feature-A, supports PCx, PCy, ... in feature-A2 (e.g., communication on the NR side) when using PCx when using feature-A, supports PCx, PCy, ... in feature-Al (e.g., communication on the LTE side) when using PCy when using feature-A, and supports PCx, PCy, ... in feature-A2 (e.g., communication on the NR side) when using PCy when using feature-A, the user terminal 20 notifies the base station apparatus 10 of each PC supported for each feature as shown in Fig. 7.

With the technology according to the present embodiment described above, the user terminal 20 can appropriately notify the base station apparatus 10 of the power class.

### (Modified example)

As described above, in the present embodiment, the user terminal 20 notifies the base station apparatus 10 of all supporting PCs for each supporting feature. Here, for example, it can be considered that the user terminal 20 supports PCx, PCy, and PCz for a feature, but that PCz for that feature is not supported in the network.

Accordingly, in the modified example, the base station apparatus 10 notifies the user terminal 20 of a PC that the user terminal 20 can use from among all PCs notified from the user terminal 20.

An example sequence in this case is shown in Fig. 8. As S201 of Fig. 8, for example, the user terminal 20 notifies PCx, PCy, and PCz as PCs supported in feature-A as capability information.

In S202, the base station apparatus 10 transmits information indicating that PCx and PCy are usable in feature-A (for example: feature-A: PCx, PCy) to the user terminal 20. This allows the user terminal 20 to determine not to apply PCz to feature-A.

### (Apparatus configuration)

Next, a functional configuration example of the base station apparatus 10 and the user terminal 20 that perform processing and operations described above will be described.

### <Base Station apparatus 10>

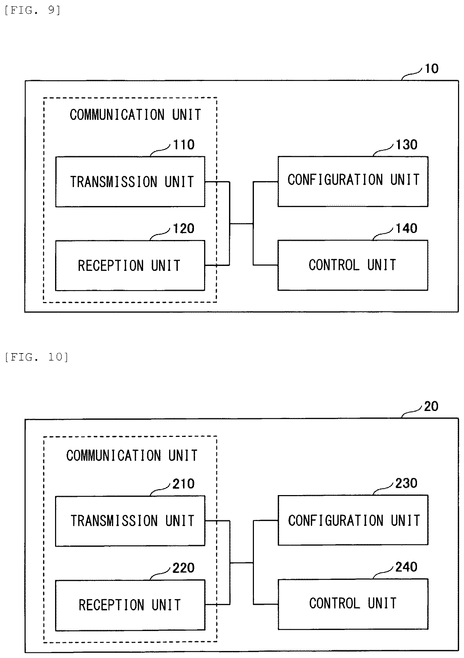

Fig. 9 is a diagram illustrating an example of a functional configuration of the base station apparatus 10. As shown in Fig. 9, the base station apparatus 10 includes a transmission unit 110, a reception unit 120, a configuration unit 130, and a control unit 140. The functional configuration shown in Fig. 9 is only one example. As long as the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The transmission unit 110 transmits the usable power class described in the modified example to the user terminal 20. The reception unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The configuration unit 130 stores pre-configured configuration information and various configuration information to be transmitted to the user terminal 20 in the storage device provided by the configuration unit 130 and reads the pre-configured configuration information from the storage device as necessary.

The control unit 140 schedules DL reception or UL transmission of the user terminal 20 through the transmission unit 110. A function unit related to signal transmission in the control unit 140 may be included in the transmission unit 110, and a function unit related to signal reception in the control unit 140 may be included in the receiving unit 120. The transmission unit 110 may be called a transmitter, and the reception unit 120 may be called a receiver.

### <User terminal 20>

Fig. 10 is a diagram illustrating an example of a functional configuration of the user terminal 20. As shown in Fig. 10, the user terminal 20 includes a transmission unit 210, a reception unit 220, a configuration unit 230, and a control unit 240. The functional configuration shown in Fig. 10 is only one example. As long as the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The transmission unit 210 transmits the power class as capability information to the base station apparatus 10 according to the content described in the present embodiment. The reception unit 220 receives various signals wirelessly and acquires signals from higher layers from the received signal of the physical layer. The reception unit 220 receives the information of the usable power class described in the modified example from the base station apparatus 10. The reception unit 220 has a function to receive NR-PSS, NR-SSS, NR-PBCH, and DL/UL/SL control signals transmitted from the base station apparatus 10, DCI by PDCCH, data by PDSCH, and the like. For example, the transmission unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the reception unit 120 may receive PSCCH, PSSCCH, PSDCH, PSDCH, or PSBCH, etc. from another user terminal 20.

The configuration unit 230 stores various configuration information received from the base station apparatus 10 or other user terminals by the reception unit 220 in a storage device provided by the configuration unit 230 and reads it from the storage device as necessary. The configuration unit 230 also stores pre-configured configuration information. The storage device stores information of supported PC per feature supported by the user terminal 20. The transmission unit 210 transmits the information of the supported PC for each feature read from the storage device to the base station apparatus 10.

The control unit 240 performs control of the user terminal 20. The control unit 240 performs determination of the maximum transmission power value according to this embodiment. A function unit related to signal transmission in the control unit 240 may be included in the transmission unit 210, and a function unit related to signal reception in the control unit 240 may be included in the reception unit 220. The transmission unit 210 may be referred to as a transmitter, and the reception unit 220 may be referred to as a receiver.

### [Summary]

According to the present embodiment, at least a terminal and a capability information transmission method shown in the following items 1 to 5 are provided.

### (Item 1)

A terminal comprising:
a transmission unit configured to transmit capability information to a base station apparatus,
wherein the transmission unit transmits, as the configuration information, each power class supported for each transmission technology in a plurality of transmission technologies to the base station apparatus.

### (Item 2)

The terminal as described in item 1,
wherein the transmission unit transmits, to the base station apparatus, each power class supported for each transmission technology in the plurality of transmission technologies for each RAT in dual connectivity which is one of transmission technologies.

### (Item 3)

The terminal as described in item 1 or 2,
wherein the plurality of transmission technologies include uplink MIMO.

### (Item 4)

The terminal as described in any one of items 1-3, further comprising:
a reception unit configured to receive a usable power class from the base station apparatus.

### (Item 5)

A capability information transmission method executed by a terminal, the method comprising:
a transmission step of transmitting capability information to a base station apparatus,
wherein the transmission step comprising transmitting, as the configuration information, each power class supported for each transmission technology in a plurality of transmission technologies to the base station apparatus.

According to any one of items 1-5, there is provided a technique that allows the user terminal to appropriately notify the base station apparatus of a power supply.

### (Hardware configuration)

The block diagrams (Fig. 9 and Fig. 10) used in the description of the embodiment described above illustrate the block of functional unit. Such function blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions transmission is referred to as the transmitting unit or the transmitter. As described above, the attainment method thereof is not particularly limited.

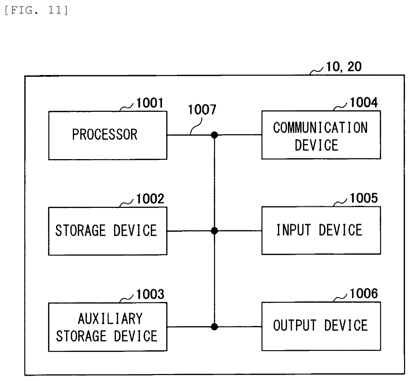

For example, the base station apparatus 10, the user terminal 20, and the like in one embodiment of this disclosure may function as a computer for performing the processing of a radio communication method of this disclosure. Fig. 11 is a diagram illustrating an example of a hardware configuration of the base station apparatus 10 and the user terminal 20 according to one embodiment of this disclosure. The base station apparatus 10 and the user terminal 20 described above may be physically configured as a computer apparatus including a processor 1001, a storage unit 1002, an auxiliary storage unit 1003, a communication unit 1004, an input unit 1005, an output unit 1006, a bus 1007, and the like.

Note that, in the following description, the word "apparatus" can be replaced with a circuit, a device, a unit, or the like. The hardware configuration of the base station apparatus 10 and the user terminal 20 may be configured to include one or a plurality of apparatuses illustrated in the drawings, or may be configured not to include a part of the apparatuses.

Each function of the base station apparatus 10 and the user terminal 20 is attained by reading predetermined software (a program) is read on hardware such as the processor 1001 and the storage unit 1002 such that the processor 1001 performs an operation, and by controlling the communication of the communication unit 1004 or by controlling at least one of reading and writing of data in the storage unit 1002 and the auxiliary storage unit 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage unit 1002 from at least one of the auxiliary storage unit 1003 and the communication unit 1004, and thus, executes various processings. A program for allowing a computer to execute at least a part of the operation described in the embodiment described above is used as the program. For example, the control unit 140 of the base station apparatus 10 illustrated in Fig. 9 may be attained by a control program that is stored in the storage unit 1002 and is operated by the processor 1001. In addition, for example, the control unit 240 of the user terminal 20 illustrated in Fig. 10 may be attained by a control program that is stored in the storage unit 1002 and is operated by the processor 1001. It has been described that the various processings described above are executed by one processor 1001, but the processings may be simultaneously or sequentially executed by two or more processors 1001. The processor 1001 may be mounted on one or more chips. Note that, the program may be transmitted from a network through an electric communication line.

The storage unit 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage unit 1002 may be referred to as a register, a cache, a main memory (a main storage unit), and the like. The storage unit 1002 is capable of retaining a program (a program code) that can be executed in order to implement a communication method according to one embodiment of this disclosure, a software module, and the like.

The auxiliary storage unit 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disk), a smart card, a flash memory (for example, a card, a stick, a key drive), a floppy (Registered Trademark) disk, a magnetic strip, and the like. The auxiliary storage unit 1003 may be referred to as an auxiliary storage unit. The storage medium described above, for example, may be a database including at least one of the storage unit 1002 and the auxiliary storage unit 1003, a server, and a suitable medium.

The communication unit 1004 is hardware for performing communication with respect to the computer through at least one of a wire network and a radio network (a transmitting and receiving device), and for example, is also referred to as a network device, a network controller, a network card, a communication module, and the like. The communication unit 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication unit 1004. In the transmitting and receiving unit, the transmitting unit and the receiving unit are mounted by being physically or logically separated.

The input unit 1005 is an input device for receiving input from the outside (for example, a keyboard, a mouse, a microphone, a switch, a button, a sensor, and the like) . The output unit 1006 is an output device for implementing output with respect to the outside (for example, a display, a speaker, an LED lamp, and the like) . Note that, the input unit 1005 and the output unit 1006 may be integrally configured (for example, a touch panel).

In addition, each of the apparatuses such as the processor 1001 and the storage unit 1002 may be connected by the bus 1007 for performing communication with respect to information. The bus 1007 may be configured by using a single bus, or may be configured by using buses different for each of the apparatuses.

In addition, the base station apparatus 10 and the user terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardwares.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the items in the above description is not essential to the invention, and the listings described in two or more items may be used by being combined, as necessary, or the listing described in one item may be applied to the listing described in another item (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station apparatus 10 and the user terminal 20 have been described by using a functional block diagram, but such an apparatus may be attained by hardware, software, or a combination thereof. Each of software that is operated by a processor of the base station apparatus 10 according to the embodiment of the invention and software that is operated by a processor of the user terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), future radio access (FRA), new radio (NR), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station apparatus 10 may be performed by an upper node, in accordance with a case. In a network provided with one or a plurality of network nodes including the base station apparatus 10, it is obvious that various operations that are performed in order for communication with respect to the user terminal 20 can be performed by at least one of the base station apparatus 10 and network nodes other than the base station apparatus 10 (for example, MME, S-GW, or the like is considered as the network node, but the network node is not limited thereto). In the above description, a case is exemplified in which the number of network nodes other than the base station apparatus 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling) . In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding information. For example, a radio resource may be indicated by an index.

The names used in the parameters described above are not a limited name in any respect. Further, expressions or the like using such parameters may be different from those explicitly disclosed in this disclosure. Various channels (for example, PUSCH, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station apparatus", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macrocell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication unit, and the like. Note that, at least one of the base station and the mobile station may be a device that is mounted on a mobile object, the mobile object itself, or the like. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station apparatus in this disclosure may be replaced with the user terminal. For example, each aspect/embodiment of this disclosure may be applied to a configuration in which communication between the base station apparatus and the user terminal is replaced with communication in a plurality of user terminals 20 (for example, may be referred to as device-to-device (D2D), vehicle-to-everything (V2X), and the like). In this case, the function of the base station apparatus 10 described above may be provided in the user terminal 20. In addition, the words "up", "down", and the like may be replaced with words corresponding to the communication between the terminals (for example, "side"). For example, an up channel, a down channel, and the like may be replaced with a side channel.

Similarly, the user terminal in this disclosure may be replaced with the base station apparatus. In this case, the function of the user terminal described above may be provided in the base station apparatus.

The terms "determining" and "determining" used in this disclosure may involve diverse operations. "Determining" and "determining", for example, are capable of including "determining" and "determining" with respect to judging, calculating, computing, processing, deriving, investigating, looking up (search, inquiry) (for example, looking up in a table, a database, or another data structure), and ascertaining, and the like. In addition, "determining" and "determining" are capable of including "determining" and "determining" with respect to receiving (for example, receiving information), transmitting (for example, transmitting information), input, output, and accessing (for example, accessing data in a memory), and the like. In addition, "determining" and "determining" are capable of including "determining" and "determining" with respect to resolving, selecting, choosing, establishing, comparing, and the like. That is, "determining" and "determining" are capable of including "determining" and "determining" with respect to any operation. In addition, "determining (determining)" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical couple or connection, may be logical couple or connection, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot on the basis of a standard to be applied.

The description "on the basis of" that is used in this disclosure does not indicate "only on the basis of", unless otherwise specified. In other words, the description "on the basis of" indicates both "only on the basis of" and "at least on the basis of".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time unit greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time unit at the time of transmitting a signal. Other designations respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, unit representing TTI may be referred to as a slot, a mini slot, and the like, but not a subframe. Also, one slot may be called a unit time. The unit time may be different in each cell according to numerology.

Here, TTI, for example, indicates minimum time unit of scheduling in radio communication. For example, in an LTE system, the base station performs scheduling for allocating a radio resource (a frequency bandwidth, transmission power, and the like that can be used in each of the user terminals 20) in TTI unit, with respect to each of the terminals 20. Note that, the definition of TTI is not limited thereto.

TTI may be transmission time unit of a data packet (a transport block), a code block, a codeword, and the like that are subjected to channel coding, or may be processing unit of scheduling, link adaptation, and the like. Note that, when TTI is applied, a time zone in which the transport block, the code block, the codeword, and the like are actually mapped (for example, the number of symbols) may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a common TTI (TTI in LTE Rel.8-12), a normal TTI, a long TTI, a common subframe, a normal subframe, a long subframe, a slot, and the like. TTI shorter than the common TTI may be referred to as a shortened TTI, a short TTI, a partial TTI (or a fractional TTI), a shortened subframe, a short subframe, a mini slot, a subslot, a slot, and the like.

Note that, the long TTI (for example, the common TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined on the basis of the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, a RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it may not assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are in the plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and changed modes without departing from the spirit and scope of this disclosure defined by the description of the claims. Therefore, the description in this disclosure is for illustrative purposes and does not have any limiting meaning with respect to this disclosure.

### EXPLANATIONS OF LETTERS OR NUMERALS

- 10: BASE STATION APPARATUS
- 110: TRANSMISSION UNIT
- 120: RECEPTION UNIT
- 130: CONFIGURATION UNIT
- 140: CONTROL UNIT
- 20: USER TERMINAL
- 210: TRANSMISSION UNIT
- 220: RECEPTION UNIT
- 230: CONFIGURATION UNIT
- 240: CONTROL UNIT
- 1001: PROCESSOR
- 1002: STORAGE UNIT
- 1003: AUXILIARY STORAGE UNIT
- 1004: COMMUNICATION UNIT
- 1005: INPUT UNIT
- 1006: OUTPUT UNIT

## Claims

1. A terminal comprising:
a transmission unit configured to transmit capability information to a base station apparatus,
wherein the transmission unit transmits, as the capability information, each power class supported for each transmission technology in a plurality of transmission technologies to the base station apparatus.

2. The terminal as claimed in claim 1,
wherein the transmission unit transmits, to the base station apparatus, each power class supported for each transmission technology in the plurality of transmission technologies for each RAT in dual connectivity which is one of transmission technologies.

3. The terminal as claimed in claim 1 or 2,
wherein the plurality of transmission technologies include uplink MIMO.

4. The terminal as claimed in any one of claims 1-3, further comprising:
a reception unit configured to receive a usable power class from the base station apparatus.

5. A capability information transmission method executed by a terminal, the method comprising:
a transmission step of transmitting capability information to a base station apparatus,
wherein the transmission step comprises transmitting, as the capability information, each power class supported for each transmission technology in a plurality of transmission technologies to the base station apparatus.
